# EUROPÄISCHE PATENTSCHRIFT

(11) **EP 1 227 725 B1**
(45) Veröffentlichungstag und Bekanntmachung des Hinweises auf die Patenterteilung: **14.04.2004**
(21) Anmeldenummer: 00979491.8
(22) Anmeldetag: 11.10.2000
(51) Int. Cl.: A01N 47/36, A01N 25/04

(54) **NICHTWÄSSRIGE ODER WASSERARME SUSPENSIONSKONZENTRATE VON WIRKSTOFFMISCHUNGEN FÜR DEN PFLANZENSCHUTZ**
NON-AQUEOUS OR HARDLY AQUEOUS SUSPENSION CONCENTRATES OF ACTIVE SUBSTANCE COMBINATIONS USED FOR PLANT PROTECTION
CONCENTRES EN SUSPENSION AQUEUX OU PEU AQUEUX DE MELANGES DE PRINCIPES ACTIFS UTILISES POUR LA PROTECTION DES PLANTES

(30) Priorität: 26.10.1999 DE 19951427
(43) Veröffentlichungstag der Anmeldung: 07.08.2002
(73) Patentinhaber: Bayer CropScience GmbH, 65929 Frankfurt/Main (DE)
(72) Erfinder: SIXL, Frank, 65618 Selters-Haintchen (DE)
(86) Internationale Anmeldenummer: PCT/EP2000/009984
(87) Internationale Veröffentlichungsnummer: WO 2001/030156

(56) Entgegenhaltungen:
- EP-A- 0 554 015
- WO-A-00/25586
- WO-A-96/41537

## Beschreibung

Die Erfindung betrifft lagerstabile, nichtwässrige oder wasserarme Suspensionskonzentrate in Form von Suspensionen, die mindestens einen in der organischen Phase dispergierten Feststoff, speziell aus der Gruppe der herbiziden Sulfonylhamstoffe, und Tenside und weitere, in der organischen Phase gelöste Wirkstoffe enthalten.

Herbizide Wirkstoffe aus der Sulfonylhamstoffreihe, wie z. B. der 1-[(Hetero)Aryl(oxy)-sulfonyl]-3-pyrimidin-2-yl- oder 1-[(Hetero)Aryl(oxy)-sulfonyl]-3-(1,3,5-triazin-2-yl)-hamstoffe, werden überwiegend in Form wasserdispergierbarer Pulver (WP) oder wasserdispergierbarer Granulate (WG) zubereitet. Ein Grund für die Bevorzugung fester Formulierungen liegt meist in der ausgeprägten Hydrolyseempfindlichkeit der Wirkstoffe dieser Stoffklasse. Da gleichzeitig ihre Löslichkeit in Wasser recht hoch ist, gestaltet sich die Entwicklung flüssiger, auf Wasser basierender Formulierungen extrem schwierig, wenn man die chemische Stabilität des Sulfonylhamstoffs garantieren will. Nur für wenige Spezialfälle sind daher lagerstabile wäßrige Suspensionskonzentrate (SC) (siehe EP-0514768) bzw. wäßrige Suspoemulsionen (SE) (siehe EP-0514769), die Sulfonylharnstoffe enthalten, in der Literatur beschrieben. Andererseits sind wasserfreie flüssige Formulierungen von Wirkstoffen oder Wirkstoffmischungen mit suspendierten Feststoffen häufig physikalisch instabil. Dispergierte Feststoffe neigt beim Lagern zum Absetzen, Verklumpen, zu Veränderungen in der Viskosität und/oder zu Inhomogenitäten in der Zubereitung.

Die Herstellung flüssiger Formulierungen von herbiziden Sulfonylhamstoffen ist besonders dann von Interesse, wenn diese Wirkstoffe mit flüssigen Adjuvantien und/oder gelösten Wirkstoffen kombiniert werden sollen, welche die anwendungstechnischen Eigenschaften, beispielsweise die herbizide Wirkung, verbessern sollen. Für zusätzlich enthaltenene gelöste Wirkstoffe kommen beispielsweise ein oder mehrere herbizid wirksame Substanzen und/oder ein oder mehrere Safener in Frage, welche eine oder beide der beiden folgenden Eigenschaften aufweisen:
1. Es handelt sich bei dem mit dem Sulfonylhamstoff zu kombinierenden Wirkstoff um eine niedrigschmelzende, organische Verbindung, die nicht ohne weiteres als Spritzpulver (WP) oder wasserdispergierbares Granulat (WG) mit befriedigenden anwendungstechnischen Eigenschaften formuliert werden kann.
2. Es handelt sich um einen Stoff, dessen Wirksamkeit in der Formulierung gesteigert, optimiert oder zuverlässig reproduzierbar ist, wenn er in einem emulgierbaren, organischen Lösemittel gelöst ist oder wenn er mit bestimmten, flüssigen oder gelösten Hilfsstoffen, sogenannten Adjuvantien, kombiniert wird.

Eine kommerziell wichtige Wirkstoffgruppe, welche die obigen Eigenschaften besitzt, ist die der substituierten Phenoxypropionsäurederivate, z. B. der Heteroaryloxyphenoxy- oder der Phenoxyphenoxypropionsäurederivate. So ist z.B. bekannt, dass die Wirkung von Fenoxaprop-P-ethyl gegen wichtige Ungräser verbessert wird, wenn bei der Applikation genügend hohe Mengen eines nichtionischen Netzmittels, z. B. Fettalkoholpolyglykolether (z. B. ®Genapol X-060, Clariant), in der Spritzbrühe gelöst sind. Weiterhin wird Fenoxaprop-P-ethyl für die Anwendung in Getreidekulturen üblicherweise mit dem kulturpflanzenschützenden Stoff (Safener, Antidot) Mefenpyr-diethyl eingesetzt, der mit 52-54 °C einen sehr niedrigen Schmelzpunkt aufweist. Wegen der genannten physikalischen Eigenschaften der Komponenten ist verständlich, dass die handelsüblichen Kombinationen von Fenoxaprop-P-ethyl/Mefenpyr-diethyl flüssig formuliert sind, entweder als Emulsion in Wasser (EW) oder als emulgierbares Konzentrat (EC). Das der gleichen Wirkstoffklasse wie Fenoxaprop-P-ethyl zugehörende Clodinafop-propargyl hat mit einem Schmelzpunkt von 48,2 - 57,1 °C für Festformulierungen entsprechend ebenfalls ungünstige physikalische Eigenschaften. Kombinationen dieses Herbizides mit dem Safener Cloquintocet-mexyl sind bisher ausschließlich in Form von emulgierbaren Konzentraten auf dem Markt.

Als weitere Wirkstoffe, die partiell oder ganz in einem organischen Lösungsmittel gelöst eingesetzt werden, kommen z. B. auch Herbizide aus der Gruppe der Hydroxybenzonitrile wie loxynil und Bromoxynil und deren handelsübliche Salze und Ester in Frage. Alternativ kann der vom Sulfonylharnstoff unterschiedliche weitere Wirkstoff ein Safener sein, ohne dass ein weiteres Herbizid enthalten ist, oder es wird ein Wirstoffgemisch aus einem weiteren Herbizid und einem Safener zugesetzt, wobei, die zusätzlichen Wirkstoffe vorzugsweise weitgehend in einem organischen Lösungsmittel gelöst vorliegen.

Im Gegensatz zu den genannten Wirkstoffen in flüssiger Formulierung werden Herbizide aus der Sulfonylharnstoffreihe wie erwähnt aus Stabilitätsgründen meist als Spritzpulver (WP) oder wasserdispergierbare Granulate (WG) formuliert. Aus EP-0313317 sind jedoch auch nicht-wäßrige Suspensionskonzentrate für bestimmte Pyridylsulfonylhamstoffe bekannt, wobei der Wirkstoff in einem Pflanzenöl suspendiert ist, um die herbizide Wirksamkeit und Selektivität des Sulfonyhamstoffs zu steigem. In EP-0313317 wird auf die chemische Stabilität des Sulfonylhamstoffes in der Formulierung nicht eingegangen. Weiterhin fehlen darin Formulierungen von Herbizidmischungen sowie Angaben, welche eine Einschätzung der chemischen oder physikalischen Stabilität von Herbizidkombinationen erlauben würde. Prinzipiell kann der Gehalt an gelösten Wirkstoffen in der organischen Phase die Stabilität der Suspension des Sulfonylhamstoffs beeinträchtigen. Allgemein bekannt ist auch die Möglickeit, dass die Kombination von Wirkstoffen in einer Coformulierung die chemische Stabilität der Wirkstoffe verringert (sogenannte Inkompatibilität der Wirkstoffe) oder auch deren biologische Verfügbarkeit oder generell Wirksamkeit reduziert.

EP-A-0554015 beschreibt Suspensionen für Pyridylsulfonylharnstoffherbizide und gegebenenfalls weiteren Herbiziden mit einem Gehalt an Pflanzenöl und/oder Mineralöl und oberflächenaktiven Verbindungen, wobei Harnstoff als Stabilisator eingesetzt wird.

WO-A-96/41537 erwähnt in Formulierungsvorschrift c) auf Seite 63 in allgemeiner Form und ohne Bezug auf Stabilitäten ölhaltige Dispersionskonzentrate von bestimmten Sulfonylhamstoffen in Kombination mit unterschiedlichen herbiziden Wirkstoffen.

Hinsichtlich der Kombinationen der Sulfonylharnstoffe mit Wirkstoffen aus anderen Strukturklassen, die vorwiegend nicht als Granulate oder Spritzpulver formuliert werden bzw. formuliert werden können, bestand deshalb die Aufgabe eine flüssige Formulierung für Sulfonylhamstoffe zu finden, welche bezüglich der physikalischen Stabilität der Formulierung, der chemischen Stabilität der Sulfonylhamstoffe und möglichst auch der biologischen Wirkung der Sulfonylhamstoffe eine Alternative oder eine Verbesserung zu den WP- und WG-Formulierungen darstellt. Es bestand weiterhin die Aufgabe, eine stabile flüssige Formulierung zu finden, die mit den anwendungstechnischen Erfordernissen und den physikalischen Eigenschaften aller enthaltenen Wirkstoffe vereinbar ist.

In WO-A-00/25586 sind bereits herbizide Formulierungen vorgeschlagen worden, welche ein Grasherbizid, z. B. Pretilachlor u. a., in Kombination mit einem Sulfonylharnstoffherbizid wie Bensulfuron-methyl in nichtwässriger flüssiger Phase und ein nichtionisches und/oder anionisches Tensid enthalten.

Es wurde nun überraschend gefunden, dass man lagerstabile flüssige, wenig Wasser enthaltende oder wasserfreie Formulierungen von Sulfonylharnstoffen und einem oder weiterer Wirkstoffen herstellen kann, indem der feste Sulfonylharnstoff in einem Lösemittel/Tensid-Gemisch, das mindestens einen weiteren Wirkstoff gelöst enthält, dispergiert (=suspendiert) wird.
Gegenstand der Erfindung sind daher flüssige Zubereitungen (Formulierungen) in Form von flüssigen Suspensionskonzentraten, dadurch gekennzeichnet, dass sie
a) einen oder mehrere feste herbizide Wirkstoffe aus der Reihe der Sulfonylhamstoffe in suspendierter Form, wobei die Sulfonylhamstoffe aus der Gruppe der (A1) Phenylsulfonylharnstoffe und deren Salzen, (A2) Thienylsulfonylhamstoffe und deren Salze, (A4) Sulfondiamid-Derivaten und deren Salzen und (A6) Alkoxyphenoxysulfonylhamstoffen und deren Salzen ausgewählt sind,
b) einen oder mehrere Wirkstoffe, die partiell oder ganz in der Komponente c) gelöst sind,
c) ein organisches Lösemittel oder Lösemittelgemisch,
d) einen oder mehrere nichtionische Emulgatoren,
e) gegebenenfalls einen oder mehrere ionische Emulgatoren,
f) gegebenenfalls ein oder mehrere Verdickungs- oder Thixotropiermittel und kein Wasser oder bis zu 30 Gewichtsprozent Wasser in gelöster Form enthalten.

Der Gehalt an Sulfonylhamstoff "in suspendierter Form" bedeutet, dass die Gesamtmenge an Sulfonylharnstoff oder ein Teil des Sulfonylharnstoffes ungelöst in fein verteilter Form vorliegt. Somit kann ein Teil des Wirkstoffs auch gelöst vorliegen. Vorzugsweise ist der Sulfonylhamstoff im Suspensionskonzentrat weitgehend ungelöst vorhanden

Daneben enthalten die erfindungsgemäßen Suspensionskonzentrate gegebenenfalls übliche Haft-, Netz-, Dispergier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel. Falls nicht störend, können gegebenenfalls auch weitere Emulgiermittel, beispielsweise nichtionische, anionische, kationische oder amphotere Emulgiermittel enthalten sein.

Auf der Basis erfindungsgemäßer Formulierungen lassen sich gegebenenfalls auch Kombinationen mit anderen pestizid wirksamen Stoffen, wie z.B. Insektiziden, Akariziden, Herbiziden, Fungiziden, sowie mit Safenem, Düngemitteln und/oder Pflanzenwachstumsregulatoren herstellen.

Als Wirkstoffe der Komponente b) kommen Wirkstoffe für Pflanzenschutzmittel, beispielsweise Herbizide, sofern sie nicht von Komponente a) umfasst sind, oder Safener, Fungizide, Insektizide, Pflanzenwachstumsregulatoren und dergleichen in Frage.

Vorzugsweise enthalten die Formulierungen als Komponente b) Safener, die in Kombination mit den enthaltenen Herbiziden a) und gegebenenfalls herbiziden Wirkstoffen b) phytotoxische Wirkungen der Herbizide an Kulturpflanzen reduzieren oder verhindern.

Vorzugsweise enthalten die Formulierungen als Komponente b) auch herbizide Wirkstoffe aus der Gruppe der substituierten Phenoxypropionsäurederivate.

Um eine hydrolytische Zersetzung der enthaltenen Sulfonylhamstoffe auszuschließen, kann man die Formulierungen wasserfrei herstellen. Dies bedeutet jedoch unter Umständen einen erheblichen technischen Aufwand, vor allem weil viele Tenside herstellungsbedingt einen Wassergehalt aufweisen. Überraschenderweise, ist es jedoch nicht nötig, die Formulierungen völlig wasserfrei herzustellen. In bestimmten Grenzen ist die Anwesenheit von Wasser durchaus tolerierbar. So wurde gefunden, dass in der Regel ein Wassergehalt von bis zu 2 Gew.-%, in Ausnahmefällen bis zu 10 Gew.-% im Suspensionskonzentrat die Stabilität nicht oder nur geringfügig beeinträchtigt. Solange der Wassergehalt nicht eine w/o-Emulsion ergibt, ist weiterhin durchaus denkbar, dass in speziellen Fällen der Formulierung Wasser zugesetzt werden kann, wenn sich hierdurch beispielsweise bestimmte physikalisch-chemische Eigenschaften verbessern lassen, z.B. die Fließfähigkeit des Produktes oder die Spontaneität, mit der die Formulierung bei Verdünnung zur Spritzbrühe in Wasser emulgiert. Der insgesamt tolerierbare Wassergehalt wird stark abhängen von der tatsächlichen Hydrolyseempfindlichkeit der Wirkstoffe und der Löslichkeit des Wassers in der in Frage kommenden Lösemittel/Tensid-Mischung. Im Allgemeinen liegt der Wassergehalt des Produktes im Bereich von 0 bis 30 Gewichtsprozent, vorzugsweise von 0 bis 20 Gew.-%, insbesondere von 0 bis 3 Gew.-%, ganz besonders von 0 bis 2 Gew.-%, ganz besonders bevorzugt von 0 bis 1 Gew.-%.

Als Herbizide aus der Sulfonylhamstoffreihe kommen beispielsweise in Frage:
A) Pyrimidinyl- oder Triazinylaminocarbonyl-[benzol-, thiophen- und (alkylsutfonyl)alkylamino-]-sulfamide und dessen Salze. Bevorzugt als Substituenten am Pyrimidinring oder Triazinring sind Alkoxy, Alkyl, Haloalkoxy, Haloalkyl, Halogen oder Dimethylamino, wobei alle Substituenten unabhängig voneinander kombinierbar sind. Bevorzugte Substituenten im Benzol-, Thiophen- oder (Alkylsulfonyl)alkylamino-Teil sind Alkyl, Alkoxy, Halogen, Nitro, Alkoxycarbonyl, Aminocarbonyl, Alkylaminocarbonyl, Dialkylaminocarbonyl, Alkoxyaminocarbonyl, Halogenalkoxy, Halogenalkyl, Alkylcarbonyl, Alkoxyalkyl, (Alkansulfonyl)alkylamino. Geeignete Sulfonylhamstoffe sind beispielsweise
A1) Phenylsulfonylharnstoffe und dessen Salze und verwandte Verbindungen, z. B.
   1-(2-Chlorphenylsulfonyl)-3-(4-methoxy-6-methyl-1,3,5-triazin-2-yl)harnstoff (Chlorsulfuron),
   1-(2-Ethoxycarbonylphenylsulfonyl)-3-(4-chlor-6-methoxypyrimidin-2-yl)harnstoff (Chlorimuron-ethyl),
   1-(2-Methoxycarbonylphenylsulfonyl)-3-(4-methoxy-6-methyl-1,3,5-triazin-2-yl)harnstoff (Metsulfuron-methyl),
   1-(2-Chlorethoxyphenylsulfonyl)-3-(4-methoxy-6-methyl-1,3,5-triazin-2-yl)harnstoff (Triasulfuron),
   1-(2-(2-Methoxyethoxy)phenylsulfonyl)-3-(4,6-dimethoxy-1,3,5-thazin-2-yl)harnstoff (Cinosulfuron),
   1-(2-(3,3,3-Trifluorpropyl)phenylsutfonyl)-3-(4-methoxy-6-methyl-1,3,5-triazin-2-yl)harnstoff (Prosulfuron),
   1-(2-Methoxycarbonylphenylsulfonyl)-3-(4-ethoxy-6-methylamino-1,3,5-triazin-2-yl)harnstoff (Ethametsulfuron-methyl),
   1-(2-Methoxycarbonylphenylsulfonyl)-3-(4,6-dimethylpyrimidin-2-yl)harnstoff. (Sulfometuron-methyl),
   1-(2-Methoxycarbonylphenylsulfonyl)-3-(4-methoxy-6-methyl-1,3,5-triazin-2-yl)-3-methylharnstoff (Tribenuron-methyl),
   1-(2-Methoxycarbonylphenylsulfonyl)-3-(4,6-bis-(difluormethoxy)pyrimidin-2-yl)harnstoff (Primisulfuron-methyl),
   3-(4-Ethyl-6-methoxy-1,3,5-triazin-2-yl)-1-(2,3-dihydro-1,1-dioxo-2-methylbenzo[b]thiophen-7-sulfonyl)hamstoff (s. EP-A-79683),
   3-(4-Ethoxy-6-ethyl-1,3,5-triazin-2-yl)-1-(2,3-dihydro-1,1-dioxo-2-methylbenzo[b]thiophen-7-sulfonyl)harnstoff (s. EP-A-79683),
   3-(4-Methoxy-6-methyl-1,3,5-triazin-2-yl)-1-(2-methoxycarbonyl-5-iodphenylsulfonyl)-harnstoff bzw. -natriumsalz (lodosulfuron-methyl bzw. dessen
   Natriumsalz s. WO 92/13845) oder die zugrundeliegende Säure Iodosulfuron oder dessen Salze,
   DPX-66037, Triflusulfuron-methyl (s. Brighton Crop Prot. Conf. - Weeds - 1995, S. 853),
   CGA-277476, (Oxasulfuron, s. Brighton Crop Prot. Conf. - Weeds -1995, S. 79), 2-[3-(4,6-Dimethoxypyrimidin-2-yl)ureidosulfonyl]-4-methylsulfonylamidomethylbenzoesäuremethylester (s. WO 95/10507),
   N,N-Dimethyl-2-[3-(4,6-dimethoxypyrimidin-2-yl)ureidosulfonyl]-4-formylaminobenzamid (s. PCT/EP 95/01344),
A2) Thienylsulfonylharnstoffe und dessen Salze, z. B.
   1-(2-Methoxycarbonylthiophen-3-ylsulfonyl)-3-(4-methoxy-6-methyl-1,3,5-triazin-2-yl)harnstoff (Thifensulfuron-methyl),
A4) Sulfondiamid-Derivate und dessen Salze, z.B.
   3-(4,6-Dimethoxypyrimidin-2-yl)-1-(N-methy)-N-methylsulfonylaminosulfonyl)harnstoff (Amidosulfuron) und Strukturanaloge (s. EP-A-131258 und Z. Pfl. Krankh. Pfl. Schutz, Sonderheft XII, 489-497 (1990));
   Cyclosulfamuron, d. h. 1-[2-(Cyclopropylcarbonyl)-phenylsulfamoyl]-3-(4,6-dimethoxy-pyrimidm-2-yl)-harnstoff (EP 463287);
A6) Alkoxyphenoxysulfonylhamstoffe und dessen Salze, wie sie in EP-A-0342569 beschrieben sind, vorzugsweise 3-(4,6-Dimethoxypyrimidin-2-yl)-1-(2-ethoxyphenoxy)-sulfonylhamstoff, oder deren Salze (Ethoxysulfuron),

Die Sulfonylhamstoffe können unter Austausch eines Wasserstoffatoms (genauer Protons) an ihrer Sulfonamidgruppe -SO₂NH- oder gegebenenfalls anderen Gruppen mit aciden Wasserstoffatomen, z. B. Carboxygruppen, durch ein für die Landwirtschaft geeigneten Kation Salze bilden. Diese Salze sind beispielsweise Metallsalze, vorzugsweise Alkali- oder Erdalkalimetallsalze, insbesondere Natriumund Kaliumsalze, oder Ammoniumsalze oder auch mit ein bis vier organischen Resten substituierte Ammoniumsalze.
Durch Anlagerung einer geeigneten anorganischen oder organischen Säure, wie beispielsweise HCl, HBr, H₂SO₄ oder HNO₃, aber auch Oxalsäure oder Sulfonsäuren an eine basische Gruppe, wie z.B. Amino oder Alkylamino, können die Sulfonylharnstoffverbindungen ebenfalls Salze bilden. Geeignete Substituenten, wie z.B. Sulfonsäure- oder Carbonsäure-gruppen, können auch innere Salze mit ihrerseits protonierbaren Gruppen, wie Aminogruppen bilden.
Die Salze werden von den erfindungsgemäß einsetzbaren Sulfonylharnstoffen umfasst, sofern nichts anderes erwähnt ist, und können analog eingesetzt werden.

Bevorzugt geeignet sind die Sulfonylharnstoffe
Chlorsulfuron, Chlorimuron-ethyl, Metsulfuron-methyl, Triasulfuron, Cinosulfuron, Prosulfuron, Ethametsulfuron-methyl, Sulfometuron-methyl, Tribenuron-methyl, Primisulfuron-methyl, Iodosulfuron-methyl, Triflusulfuron-methyl,
Oxasulfuron, 2-[3-(4,6-Dimethoxypyrimidin-2-yl)ureidosulfonyl]-4-methylsulfonylamidomethyl-benzoesäuremethylester, N,N-Dimethyl-2-[3-(4,6-dimethoxypyrimidin-2-yl)ureidosulfonyl]-4-formylaminobenzamid, Thifensulfuron-methyl, Amidosulfuron, Ethoxysulfuron und deren Salze,
insbesondere Chlorsulfuron, Chlorimuron-ethyl, Metsulfuron-methyl, Triasulfuron, Cinosulfuron, Prosulfuron, Ethametsulfuron-methyl, Sulfometuron-methyl,
Tribenuron-methyl, Primisulfuron-methyl, lodosulfuron-methyl-natrium, Triflusulfuron-methyl, 2-[3-(4,6-Dimethoxypyrimidin-2-yl)ureidosulfonyl]-4-methylsulfonylamidomethyl-benzoesäuremethylester, N,N-Dimethyl-2-[3-(4,6-dimethoxypyrimidin-2-yl)ureidosulfonyl]-4-formylaminobenzamid, Thifensulfuron-methyl, Amidosulfuron, Ethoxysulfuron und deren Salze,

Herbizidwirkstoffe aus der Sulfonylharnstoffreihe sind in den erfindungsgemäßen Formulierungen beispielsweise in Mengen von 0,1 bis 50 Gew.-%, bevorzugt 0,1 bis 20 Gew.-%, insbesondere 0,2 bis 5 Gew.-%, bezogen auf das Gewicht der Formulierung enthalten.

Geeignete Herbizide vom Typ der substituierten Phenoxypropionsäurederivate (zu Komponente b) sind beispielsweise
B1) Phenoxy-phenoxy- und Benzyloxy-phenoxy-carbonsäure-derivate, z. B.
   2-(4-(2,4-Dichlorphenoxy)-phenoxy)-propionsäuremethylester (Diclofop-methyl),
   2-(4-(4-Brom-2-chlorphenoxy)-phenoxy)-propionsäuremethylester (s. DE-A-2601548),
   2-(4-(4-Brom-2-fluorphenoxy)-phenoxy)-propionsäuremethylester (s. US-A-4808750),
   2-(4-(2-Chlor-4-trifluormethylphenoxy)-phenoxy)-propionsäuremethylester (s. DE-A-2433067),
   2-(4-(2-Fluor-4-trifluormethylphenoxy)-phenoxy)-propionsäuremethylester (s. US-A-4808750),
   2-(4-(2,4-Dichlorbenzyl)-phenoxy)propionsäuremethylester (s. DE-A-2417487),
   4-(4-(4-Trifluormethylphenoxy)-phenoxy)-pent-2-en-säureethylester,
   2-(4-(4-Trifluormethylphenoxy)-phenoxy)-propionsäuremethylester (s. DE-A-2433067),
   2-(4-(4-Cyano-2-fluorphenoxy)-phenoxy)-propionsäurebutylester (Cyhalofop-butyl, DEH-112)
B2) "Einkernige" Heteroaryloxy-phenoxy-alkancarbonsäurederivate, z. B.
   2-(4-(3,5-Dichlorpyridyl-2-oxy)-phenoxy)-propionsäureethylester (s. EP-A-2925),
   2-(4-(3,5-Dichlorpyridyl-2-oxy)-phenoxy)-propionsäurepropargylester (EP-A-3114),
   2-(4-(3,5-Dichlorpyridyl-2-oxy)-phenoxy)-propionsäurebutylester (Pirifenop-butyl),
   2-(4-(3-Chlor-5-trifluormethyl-2-pyridyloxy)-phenoxy)-propionsäure-methylester (Haloxyfop-methyl,s. EP-A-3890) und andere Ester sowie entsprechende Wirkstoffe aus der D-Reihe (Haloxyfop-P),
   2-(4-(3-Chlor-5-trifluormethyl-2-pyridyloxy)-phenoxy)-propionsäure-ethylester (s. EP-A-3890),
   (2R)-2-(4-(5-Chlor-3-fluor-2-pyridyloxy)-phenoxy)-propionsäurepropargylester (Clodinafop-propargyl, s. EP-A-191736),
   2-(4-(5-Trifluormethyl-2-pyridyloxy)-phenoxy)-propionsäurebutylester (Fluazifop-butyl) und andere Ester sowie entsprechende Wirkstoffe aus der D-Reihe (Fluazifop-P),
   Isoxapyrifop (HOK-868)
B3) "Zweikernige" Heteroaryloxy-phenoxy-alkancarbonsäurederivate, z. B.
   2-(4-(6-Chlor-2-chinoxalyloxy)-phenoxy)-propionsäure-methylester, -ethyl und tetrahydrofuran-2-ylmethylester (Quizalofop-methyl, ∼ethyl und -tefuryl) sowie entsprechende Wirkstoffe aus der D-Reihe (Quizalofop-P),
   2-(4-(6-Fluor-2-chinoxalyloxy)-phenoxy)-propionsäuremethylester (s. J. Pest. Sci. Vol. 10, 61 (1985)),
   2R-2-(4-(6-Chlor-2-chinoxalyloxy)-phenoxy)-propionsäure und -2-isopropylidenaminooxyethylester (Propaquizafop),
   2-(4-(6-Chlorbenzoxazol-2-yl-oxy)-phenoxy)-propionsäureethylester (Fenoxaprop-ethyl), dessen D(+) Isomer (Fenoxaprop-P-ethyl) und
   2-(4-(6-Chlorbenzthiazol-2-yloxy)-phenoxy)-propionsäureethylester (s. DE-A-2640730).

Bevorzugt geeignete Phenoxypropionsäurederivate sind:
Diclofop-methyl, Cyhalofop-butyl, Pirifenop-butyl, Haloxyfop-methyl, Haloxyfop-P-methyl, Clodinafop-propargyl, Fluazifop-butyl, Fluazifop-P-butyl, Quizalofop-methyl oder -ethyl oder -tefuryl, Quizalofop-P-methyl oder -ethyl oder -tefuryl, Propaquizafop, Fenoxaprop-ethyl), Fenoxaprop-P-ethyl.

Insbesondere geeignet sind Fenoxaprop-ethyl, Fenoxaprop-P-ethyl, Clodinafop-propargyl und Cyhalofop-butyl.

Wenn Herbizidwirkstoffe aus der Phenoxypropionsäure-reihe in den erfindungsgemäßen Formulierungen enthalten sind, sind zweckmäßig beispielsweise Mengen von 0,5 bis 50 Gew.-%, bevorzugt von 2 bis 30 Gew.-%, insbesondere von 5 bis 15 Gew.-% an Phenoxypropionsäure(derivat) bezogen auf das Gewicht der Formulierung enthalten.

Bevorzugt sind als Komponente b) in den Formulierungen auch Safener, die zweckmäßig und in der Regel in der dem Fachmann bekannten Weise auf einzelne oder mehrere der enthaltenen Wirkstoffe abgestimmt sind. Im Allgemeinen kommen als Safener beispielsweise folgende Wirkstoffe in Frage:
(a) Verbindungen vom Typ der Dichlorphenylpyrazolin-3-carbonsäure, vorzugsweise Verbindungen wie 1-(2,4-Dichlorphenyl)-5-(ethoxycarbonyl)-5-methyl-2-pyrazolin-3-carbonsäureethylester (S1-1) ("Mefenpyr-diethyl", PM, S. 781-782), und verwandte Verbindungen, wie sie in der WO 91/07874 beschrieben sind,
(b) Derivate der Dichlorphenylpyrazotcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und EP-A-269 806 beschrieben sind.
(c) Verbindungen vom Typ der Triazolcarbonsäuren, vorzugsweise Verbindungen wie Fenchlorazol(-ethylester), d.h. 1-(2,4-Dichlorphenyl)-5-trichlormethyl-(1H)-1,2,4-triazol-3-carbonsäureethylester (S1-6), und verwandte Verbindungen EP-A-174 562 und EP-A-346 620);
(d) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-carbonsäureethylester (S1-9) ("Isoxadifen-ethyl") oder -n-propylester (S1-10) oder der 5-(4-Fluorphenyl)-5-phenyl-2-isoxazolin-3-carbonsäureethylester (S1-11), wie sie in der deutschen Patentanmeldung (WO-A-95/07897) beschrieben sind.
(e) Verbindungen vom Typ der 8-Chinolinoxyessigsäure (S2), vorzugsweise (5-Chlor-8-chinolinoxy)-essigsäure-(1-methyl-hex-1-yl)-ester (Common name "Cloquintocet-mexyl" (S2-1) (siehe PM, S. 263-264) (5-Chlor-8-chinolinoxy)-essigsäure-(1,3-dimethyl-but-1-yl)-ester (S2-2), (5-Chlor-8-chinolinoxy)-essigsäure-4-allyl-oxy-butylester (S2-3), (5-Chlor-8-chinolinoxy)-essigsäure-1-allyloxy-prop-2-ylester (S2-4), (5-Chlor-8-chinolinoxy)-essigsäureethylester (S2-5), (5-Chlor-8-chinolinoxy)-essigsäuremethylester (S2-6), (5-Chlor-8-chinolinoxy)-essigsäureallylester (S2-7), (5-Chlor-8-chinolinoxy)-essigsäure-2-(2-propyliden-iminoxy)-1-ethylester (S2-8), (5-Chlor-8-chinolinoxy)-essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind.
(f) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallylester, (5-Chtor-8-chinolinoxy)-malonsäure-methyl-ethylester und verwandte Verbindungen, wie sie in EP-A-0 582 198 beschrieben sind.
(g) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).
(h) Wirkstoffe vom Typ der Pyrimidine, die als bodenwirksame Safener in Reis angewendet werden, wie z. B. "Fenclorim" (PM, S. 512-511) (= 4,6-Dichlor-2-phenylpyrimidin), das als Safener für Pretilachlor in gesätem Reis bekannt ist,
(i) Wirkstoffe vom Typ der Dichloracetamide, die häufig als Vorauflaufsafener (bodenwirksame Safener) angewendet werden, wie z. B. "Dichlormid" (PM, S. 363-364) (= N,N-Diallyl-2,2-dichloracetamid), "R-29148" (= 3-Dichloracetyl-2,2,5-trimethyl-1,3-oxazolidin von der Firma Stauffer),
   "Benoxacor" (PM, S. 102-103) (= 4-Dichloracetyl-3,4-dihydro-3-methyl-2H-1,4-benzoxazin). "PPG-1292" (= N-Allyl-N-[(1,3-dioxolan-2-yl)-methyl]-dichloracetamid von der Firma PPG Industries),
   "DK-24" (= N-Allyl-N-[(allylaminocarbonyl)-methyl]-dichloracetamid von der Firma Sagro-Chem),
   "AD-67" oder "MON 4660" (= 3-Dichloracetyl-1-oxa-3-aza-spiro[4,5]decan von der Firma Nitrokemia bzw. Monsanto),
   "Diclonon" oder "BAS145138" oder "LAB145138" (= 3-Dichloracetyl-2,5,5-trimethyl-1,3-diazabicyclo[4.3.0]nonan von der Firma BASF) und
   "Furilazol" oder "MON 13900" (siehe PM, 637-638) (= (RS)-3-Dichloracetyl-5-(2-furyl)-2,2-dimethyloxazolidin)
(k) Wirkstoffe vom Typ der Dichloracetonderivate, wie z. B.
   "MG 191" (CAS-Reg. Nr. 96420-72-3) (= 2-Dichlormethyl-2-methyl-1,3-dioxolan von der Firma Nitrokemia), das als Safener für Mais bekannt ist,
(l) Wirkstoffe vom Typ der Oxyimino-Verbindungen, die als Saatbeizmittel bekannt sind, wie z. B.
   "Oxabetrinil" (PM, S. 902-903) (= (Z)-1,3-Dioxolan-2-ylmethoxyimino(phenyl)acetonitril), das als Saatbeiz-Safener für Hirse gegen Schäden von Metolachlor bekannt ist,
   "Fluxofenim" (PM, S. 613-614) (= 1-(4-Chlorphenyl)-2,2,2-trifluor-1-ethanon-O-(1,3-dioxolan-2-ylmethyl)-oxim, das als Saatbeiz-Safener für Hirse gegen Schäden von Metolachlor bekannt ist, und
   "Cyometrinil" oder "-CGA-43089" (PM, S. 1304) (= (Z)-Cyanomethoxyimino(phenyl)acetonitril), das als Saatbeiz-Safener für Hirse gegen Schäden von Metolachlor bekannt ist,
(m) Wirkstoffe vom Typ der Thiazolcarbonsäureester, die als Saatbeizmittel bekannt sind, wie z. B.
   "Flurazol" (PM, S. 590-591) (= 2-Chlor-4-trifluormethyl-1,3-thiazol-5-carbonsäurebenzylester), das als Saatbeiz-Saferier für Hirse gegen Schäden von Alachlor und Metolachlor bekannt ist,
(n) Wirkstoffe vom Typ der Naphthalindicarbonsäurederivate, die als Saatbeizmittel bekannt sind, wie z. B.
   "Naphthalic anhydrid" (PM, S. 1342) (= 1,8-Naphthalindicarbonsäureanhydrid), das als Saatbeiz-Safener für Mais gegen
   Schäden von Thiocarbamatherbiziden bekannt ist,
(o) Wirkstoffe vom Typ Chromanessigsäurederivate, wie z. B.
   "CL 304415" (CAS-Reg. Nr. 31541-57-8) (= 2-(4-Carboxy-chroman-4-yl)-essigsäure von der Firma American Cyanamid), das als Safener für Mais gegen Schäden von Imidazolinonen bekannt ist,
(p) Wirkstoffe, die neben einer herbiziden Wirkung gegen Schadpflanzen auch Safenerwirkung an Kulturpflanzen wie Reis aufweisen, wie z. B.
   "Dimepiperate" oder "MY-93" (PM, S. 404-405) (= Piperidin-1-thiocarbonsäure-S-1-methyl-1-phenylethylester), das als Safener für Reis gegen Schäden des Herbizids Molinate bekannt ist,
   "Daimuron" oder "SK 23" (PM, S. 330) (= 1-(1-Methyl-1-phenylethyl)-3-p-tolylharnstoff), das als Safener für Reis gegen Schäden des Herbizids Imazosulfuron bekannt ist,
   "Cumyluron" = "JC-940" (= 3-(2-Chlorphenylmethyl)-1-(1-methyl-1-phenylethyl)-harnstoff, siehe JP-A-60087254), das als Safener für Reis gegen Schäden einiger Herbizide bekannt ist,
   "Methoxyphenon" oder "NK 049" (= 3,3'-Dimethyl-4-methoxy-benzophenon), das als Safener für Reis gegen Schäden einiger Herbizide bekannt ist, "CSB" (= 1-Brom-4-(chlormethylsulfonyl)-benzol) (CAS-Reg. Nr. 54091-06-4 von Kumiai), das als Safener gegen Schäden einiger Herbizide in Reis bekannt ist,
(q) N-Acylsulfonamide der Formel (S3) und ihre Salze, 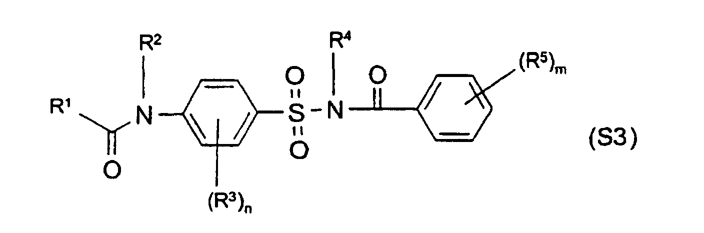 wie sie in WO-A-97/45016 beschrieben sind,
(r) Acylsulfamoylbenzoesäureamide der allgemeinen Formel (S4), gegebenenfalls auch in Salzform, 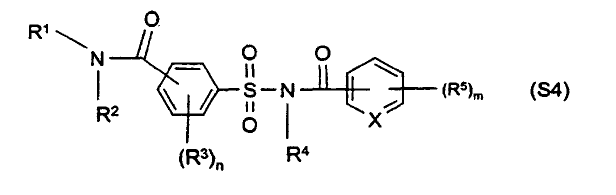 wie sie in der Internationalen Anmeldung Nr. PCT/EP98/06097 beschrieben sind, und
(s) Verbindungen der Formel (S5), 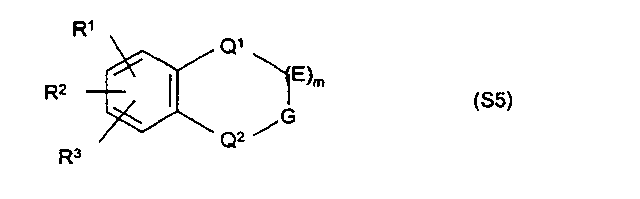 wie sie in der WO-A 98/13 361 beschrieben sind,
   einschließlich der Stereoisomeren und den in der Landwirtschaft gebräuchlichen Salzen.

Von besonderem Interesse sind unter den genannten Safenem sind Mefenpyr-diethyl (S1-1), Isoxadifen-ethyl (S1-9) und Cloquintocet-mexyl (S2-1), insbesondere (S1-1) oder (S1-9) in Formulierungen mit einem Sulfonylharnstoff als herbizidem Wirkstoff, auch als alleinigem Wirkstoff, oder insbesondere auch (S1-1) oder (S1-9) in Formulierungen, welche Sulfonylharnstoff und als weiteren herbiziden Wirkstoff Fenoxaprop-ethyl oder Fenoxaprop-P-ethyl enthalten, und insbesondere auch (S2-1) in Formulierungen, welche Sulfonylharnstoff und als weiteren herbiziden Wirkstoff Clodinafop-propargyl enthalten.

Falls nicht mit speziellen Quellenangaben vermerkt, sind die genannten Wirkstoffe in der Regel in dem Handbuch "The Pesticide Manual", 11th edition, The British Crop Protection Council and the Royal Soc. of Chemistry, 1997 und dort zitierter Literatur beschrieben.

Das Gewichtsverhältnis von Herbizid-Komponenten a) oder gegebenenfalls Herbizid-Komponenten a) und b) zu den Safenem unter der Komponente b) kann in einem weiten Bereich variieren, z. B. im Bereich von 1:200 bis 200:1, vorzugsweise 1:100 bis 100:1, insbesondere 1:20 bis 20:1, ganz besonders 1:10 bis 10:1.

Safener sind in den erfindungsgemäßen Formulierungen vorzugsweise in Mengen von 0,1 bis 40 Gew.-%, insbesondere von 0,1 bis 15 Gew.-%, ganz bevorzugt von 1 bis 5 Gew.-%, bezogen auf das Gewicht der Formulierung enthalten.

Die Wirkstoffkomponente b) bzw. Gemische von Wirkstoffen b) sind in der Regel in Mengen von 0,1 bis 60 Gew.-%, vorzugsweise 0,1 bis 50 Gew.-%, insbesondere 0,5 bis 30 Gew.-%, ganz besonders 3 bis 20 Gewichtsprozent in der erfindungsgemäßen Formulierung enthalten.

Der Gehalt an Komponenten a) und b) und gegebenenfalls zusätzlich weiteren Kombinationswirkstoffen (Gesamtwirkstoffgehalt) ist vorzugsweise im Bereich von 0,1 bis 60 Gew.-%, vorzugsweise 0,6 bis 50 Gew.-%, insbesondere 2,5 bis 25 Gew.-%, ganz besonders 7 bis 20 Gew.-%.

Als organische Lösungsmittel (Komponente c) kommen beispielsweise in Frage:
1. Weitgehend unpolare Lösungsmittel wie
   ◆ aromatische Kohlenwasserstoffe, die vom Benzol abgeleitet sind, wie z.B. Toluol, Xylole, Mesitylen, Diisopropylbenzol und dessen höhere Homologe, Indan und Naphthalinderivate wie 1-Methylnaphthalin, 2-Methylnaphthalin;
   ◆ aliphatische Kohlenwasserstoffe, wie z.B. Pentan, Hexan, Octan, Cyclohexan, entsprechende Mineralöle aus der aliphatischen oder isoparaffinischen Reihe wie Lösemittel aus der ®Exol D-Reihe und ®Isopor-Reihe von Exxon,
   ◆ Gemische von aromatischen und aliphatischen Kohlenwasserstoffen, wie z. B. entsprechende "aromatische" Mineralöle, wie Mineralöle aus der ®Solvesso-Reihe (Exxon),
   ◆ halogenierte aliphatische Kohlenwasserstoffe wie Methylenchlorid,
   ◆ halogenierte aromatische Kohlenwasserstoffe wie Chlorbenzol, Dichlorbenzole;
2. polare lipophile Lösemittel wie
   ◆ Öle, z.B. Öle pflanzlicher oder tierischer Herkunft wie gemischte oder einheitliche Fettsäureglyzerinester (meist Triglyzeride) oder Fettsäureglykolester, jeweils vorzugsweise auf Basis von gesättigten und/oder ungesättigten Fettsäuren mit 8 bis 24 C-Atomen, insbesondere 12 bis 22 C-Atomen, z. B. Maiskeimöl, Rapsöl, Sonnenblumenöl, Baumwollsaatöl, Leinöl, Sojaöl, Kokosöl, Palmöl, Distelöl und Rhizinusöl,
   ◆ Ester aus der Gruppe der gesättigten oder ungesättigten aliphatischen Carbonsäureester (Monocarbonsäuremonoester), vorzugsweise Ester von aliphatischen Carbonsäuren mit 1 bis 24 C-Atomen und Alkanolen mit 1 bis 22 C-Atomen, insbesondere
      a) (C₁-C₇)Alkancarbonsäure-(C₁-C₆)alkylester wie Essigester,
      b) ölartige gesättigte oder ungesättigte (C₈-C₂₂)Fettsäure-(C₁-C₆)alkylester, wie Caprylsäurealkylester, Caprinsäurealkylester, Laurinsäurealkylester, Palmitinsäurealkylester, Stearinsäurealkylester, Ölsäurealkylester, Linolsäurealkylester, Linolensäurealkylester, vorzugsweise jeweils mit 1 bis 8 C-Atomen im Alkoholteil, und Derivate von pflanzlichen und tierischen Ölen, wie Rapssäure-(C₁-C₈)alkylester, vorzugsweise Rapssäure-methylester (= "Rapsöl-methylester") und Rapssäure-ethylester (= "Rapsöl-ethylester"),
   ◆ Ester aromatischer Carbonsäuren wie Phthalsäure-(C₁-C₁₂)alkylester, speziell Phthalsäure(C₄-C₈)alkylester, oder Ester anderer organischer Säuren,
   ◆ Ester anderer organischer Säuren wie Alkylphosphonsäureester, z. B. [(C₁-C₁₈)Alkyl]-phosphonsäure-di-[(C₁-C₁₂)alkyl-und/oder -cycloalkyl]-ester, vorzugsweise ein [(C₄-C₁₆)Alkyl]-phosphonsäure-di-[(C₁-C₁₂)alkyl]-ester, insbesondere Oktanphosphonsäurebis-(2-ethylhexyl)-ester (Hoe S 4326, Clariant).
3. Mischungen der unter 1 und/oder 2 genannten Lösemittel,
4. Gemische aus einem oder mehreren der unter 1 und 2 genannten Lösemitteln und einem Nebenanteil, d. h. weniger als 50 Gew.-%, vorzugsweise weniger als 30 Gew.-%, insbesondere weniger als 15 Gew.-% eines polaren aprotischen oder protischen Lösemittels wie
   ◆ Ether wie Tetrahydrofuran (THF), Dioxan, Alkylenglykolmonoalkylether und -dialkylether, wie z.B. Propylenglykolmonomethylether, Propylenglykolmonoethylether, Ethylenglykolmonomethylether oder -monoethylether, Diglyme und Tetraglyme;
   ◆ Amide wie Dimethylformamid (DMF), Dimethylacetamid und N-Alkylpyrrolidone, z. B. N-Methyl-pyrrolidon (NMP);
   ◆ Ketone wie Aceton;
   ◆ Nitrile wie Acetonitril, Propionitril, Butyronitril und Benzonitril;
   ◆ Sulfoxide und Sulfone wie Dimethylsulfoxid (DMSO) und Sulfolan;
   ◆ ein- oder mehrwertige Alkohole mit vorzugsweise 1 bis 12 C-Atomen wie Methanol, Ethanol, Propanol, Isopropanol, n-, iso-, sec- und tert-Butanol, n-Hexanol, n-Octanol, n-Decanol, n-Dodecanol, Ethylenglycol und Glyzerin.

Bei der Wahl oder Zumischung von polaren Lösungsmittel sind solche bevorzugt, in dem oder in deren Mischung mit den übrigen organischen Lösemitteln der Sulfonylharnstoff nur wenig gelöst ist.

Als bevorzugte Lösemittel kommen in Frage:
- aromatische Lösemittel, die von Benzol abgeleitet sind, wie Xylol, Mesitylen, Indan, Diisopropylbenzol und höhere Homologe sowie 6-16C-Aromatengemische aus der ®Solvesso-Reihe von Exxon, wie z.B. Solvesso® 100 (Kp. 162-177 °C), Solvesso® 150 (Kp. 187-207 °C) und Solvesso® 200 (Kp. 219-282 °C), oder Gemische der genannten Lösungsmittel,
- nichtaromatische Lösemittel, z.B. die aliphatischen und isoparaffinischen Lösemittel aus der ®Exsol D- und ®Isopor-Reihe von Exxon, in Mischung mit einem aromatischen Lösemittel;
- Öle pflanzlicher Herkunft wie Fettsäureglyzerinester mit 8 bis 22 C-Atomen, vorzugsweise 12 bis 22, insbesondere 18 C-Atome im Fettsäureteil, z. B. Rapsöl,
- (C₈-C₂₂)Fettsäure-(C₁-C₆)alkylester, wie Caprylsäurealkylester, Caprinsäurealkylester, Laurinsäurealkylester, Palmitinsäurealkylester, Stearinsäurealkylester, Ölsäurealkylester, Linolsäurealkylester, Linolensäurealkylester und Rapssäure-(C₁-C₆)alkylester, vorzugsweise Rapssäure-methylester (= "Rapsöl-methylester") und Rapssäure-ethylester (= "Rapsöl-ethylester"), insbesondere in Mischung mit einem aromatischen Lösemittel.

Besonders bevorzugte Lösemittel sind:
- aromatische Lösemittel, die von Benzol abgeleitet sind, wie Xylol, Mesitylen, Indan, Diisopropylbenzol,
- aromatische Lösemittel aus 6-16C-Aromatengemischen, z. B. Produkte aus der ®Solvesso-Reihe von Exxon, wie z.B. Solvesso® 100 (Kp. 162-177 °C), Solvesso® 150 (Kp. 187-207 °C) und Solvesso® 200 (Kp. 219-282 °C), oder Gemische der genannten Lösungsmittel,
- Mischungen aus nicht aromatischen Lösemitteln und aromatischen Lösungsmitteln, z. B. Mischungen aus aliphatischen und isoparaffinischen Lösemittel aus der ®Exsol D- und ®Isopor-Reihe von Exxon und aromatischen Lösemitteln wie den obengenannten aromatischen Lösungsmitteln auf Benzolbasis oder Aromatengemischen wie Produkten aus der ®Solvesso-Reihe;
- (C₈-C₂₂)Fettsäure-(C₁-C₄)alkylester, wie Caprylsäurealkylester, Caprinsäurealkylester, Laurinsäurealkylester, Palmitinsäurealkylester, Stearinsäurealkylester, Ölsäurealkylester, Linolsäurealkylester, Linolensäurealkylester und Rapssäure-(C₁-C₄)alkylester, vorzugsweise Rapssäure-methylester (= "Rapsöl-methylester") und Rapssäure-ethylester (= "Rapsöl-ethylester"), insbesondere auch solche in Mischung mit einem der genannten aromatischen Lösemittel.

Der Gesamtlösemittelanteil liegt beispielsweise im Bereich von 5 bis 95 Gew.-%, vorzugsweise 10 bis 90 Gew.-%, insbesondere 40 bis 80 Gew.-%, bezogen auf das Gewicht der Formulierung.

Als Emulgatoren (Komponente d) kommen, einzeln oder in Kombination untereinander, vor allem Tenside in Frage, die in dem betreffenden Lösemittel löslich sind.
Erfindungsgemäß einsetzbare nichtionische Tenside können beispielsweise folgende sein:
- Ethoxylierte, gesättigte und ungesättigte aliphatische Alkohole, vorzugweise ethoxylierte Fettalkohole mit 8 bis 24 C-Atomen im Alkylrest und 1 bis 100, insbesondere 2 bis 50 Ethylenoxy-Einheiten (EO) im Polyglykol-teil, z.B. ethoxylierter Isotridecyclalkohol, Cocosfettalkohol, Oleylalkohol, Stearylalkohol, Talgfettalkohol, vorzugsweise ethoxylierter Isotridecyl- oder Oleylalkohol mit einem Ethoxylierungsgrad von 2 bis 20, bevorzugt 3 bis 8 EO, z.B. Tenside aus der ®Genapol-X- bzw. Genapol-O-Reihe von Clariant,
- Endständig veretherte ethoxylierte, gesättigte und ungesättigte aliphatische Alkohole, vorzugweise endständige mit (C₁-C₆)Alkyl, insbesondere mit Methyl, Ethyl, n- und i-Propyl, n, i-, sec- und t-Butyl veretherte ethoxylierte Fettalkohole mit 8 bis 24 C-Atomen im Alkylrest und 1 bis 100, insbesondere 2 bis 50 Ethylenoxy-Einheiten (EO) im Polyethylenglykol-teil, z.B. endständig mit Methyl, Ethyl, n- und i-Propyl, n-, i-, sec- und t-Butyl veretherte ethoxylierte Isotridecyloder Oleylalkohole mit einem Ethoxylierungsgrad von 2 bis 20, bevorzugt 3 bis 8 EO, z.B. Tenside aus der ®Genapol-X-alkylether bzw. Genapol-O-alkylether-Reihe von Clariant, vorzugsweise Genapol-X-060-methylether,
- Ethoxylierte Arylalkylphenole, vorzugsweise Tristyrylphenole mit einer mittleren EO-Kettenlänge im Bereich von 10 bis 80 EO, bevorzugt 16 bis 40 EO, wie beispielsweise die von Rhodia angebotenen Produkte ®Soprophor BSU, Soprophor CY/8, Soprophor S/25 oder Soprophor S/40-P,
- Ethoxylierte Alkylphenole mit ein oder mehreren Alkylresten, beispielsweise mit 1 bis 12 C-Atomen, vorzugsweise Nonylphenole, z.B. aus der ®Arkopal-N Reihe von Clariant mit einem Ethoxylierungsgrad von 2 bis 40 EO, bevorzugt 4 bis 15 EO,
- Ethoxylierte Hydroxyfettsäuren, vorzugsweise Rizinusölderivate mit einem Ethoxylierungsgrad von 10 bis 80 EO, bevorzugt 30 bis 40 EO, wie beispielsweise ®Emulsogen EL und Emulsogen EL 400 von Clariant,
- Tenside aus der Gruppe der ethoxylierten Sorbitanester, z.B. ®Atplus 309 F (ICI),
- Block-copolymere aus Ethylenoxid (EO) und Propylenoxid (PO) unterschiedlicher Kettenlängen, z. B. mit einem Molekulargewicht der Polypropylenoxid-Einheit zwischen 200 und 10000, vorzugsweise 1000 bis 4000, wobei der Polyethylenglykolanteil vorzugsweise 10 bis 80 Gewichstprozent beträgt, beispielsweise nichtionische Tenside aus der Serie ®Pluronic (BASF), wie Pluronic L und Pluronic PE, oder ®Synperonic (Uniqema), wie Synperonic PE P 75 und Synperonic PE L 121,
- Kondensationsprodukte aus EO-PO-Block-copolymeren und Ethylendiamin, z. B. mit einem Molekulargewicht der Polypropylenoxid-Einheit zwischen 200 und 10000, vorzugsweise 2000 bis 6000, wobei der Polyethylenglykolanteil vorzugsweise 10 bis 80 Gewichtsprozent beträgt, beispielsweise nichtionische Tenside aus der Serie ®Pluronic T (BASF) oder ®Synperonic T (Uniqema), wie ®Synperonic T 707 oder ®Synperonic T 908.

Die chemische Stabilität des oder der enthaltenen Sulfonylharnstoffe kann in Abhängigkeit vom Typ des eingesetzten Emulgators variieren. Häufig wurde beobachtet, dass der Einsatz von Tensiden mit blockierter Hydroxyfunktion die Stabilität erhöht. Dieser Sachverhalt wird auch durch die Ausführungsbeispiele (siehe weiter unten) gestützt. So wird bei den Formulierungen, die beispielsweise den Methylether von ®Genapol X-060 enthalten (siehe Tabelle 1, Beispiele 7 und 8), nach Lagerung bei 35°C über 3 bis 4 Monate keine, oder nur geringfügige (< 5 %) chemische Zersetzung des Sulfonylharnstoffs (hier lodosulfuron-methyl-natrium) beobachtet. Dagegen findet man unter gleichen Lagerbedingungen 10 bis 15 % Abbau, wenn als Emulgator nicht endgruppenblockierte Tenside wie ®Genapol X-060 (Beispiel 4) oder ®Genapol O-050 (Beispiel 10) eingesetzt werden. Bei Lagerung unter Umgebungstemperatur (20 bis 25°C) sind allerdings auch letztere Formulierungen lagerstabil. So weisen Formulierungen vom Typ 4 oder 12 auch nach 18-monatiger Lagerung in diesem Temperaturbereich noch den vollen Wirkstoffgehalt auf.

Der Anteil an Emulgator (Komponente d) liegt beispielsweise im Bereich von 0,5 bis 40 Gew.-%, vorzugsweise 0,5 bis 20 Gew.-%, insbesondere 5 bis 15 Gew.-% bezogen auf das Gewicht der Formulierung.

Zur Verbesserung des Emulsionsvermögens kann zusätzlich ein ionisches, vorzugsweise öllösliches ionisches Tensid zugesetzt werden. Als ionische Tenside geeignet sind beispielsweise:
- Salze von Alkylarylsulfonsäuren mit linearer oder verzweigter Alkylkette,
- partielle Phosphorsäureester oder partielle Schwefelsäureester von jeweils ethoxylierten Di- und Tristyrylphenolen, jeweils als freie Säure oder Salze, z. B. Alkalimetallsalze, mit einem Ethoxylierungsgrad von 6 bis 16; beispielsweise
- phosphatierte ethoxylierte Tristryrylphenole, beispielsweise mit 5 bis 20 EO, vorzugsweise 16 EO (®Soprophor FL, Rhodia),
- phosphatierte ethoxylierte Alkylphenole (partielle Ester) oder deren Salze, z. B. ®Soprophor PA 17, 19, 21 oder 23 oder MB bzw. die Kaliumsalze ®Soprophor PS 17, 19, 21 oder 23;
- sulfatierte ethoxylierte Distyrylphenole mit vorzugsweise 5 bis 15 EO, z. B. ®Soprophor DSS 4, 5, 7 oder 15;
- sulfatierte ethoxylierte Tristyrylphenole mit vorzugsweise 5 bis 20 EO, insbesondere 16 EO, z. B. ®Soprophor 4 D 384.

Bevorzugt sind Alkalimetallsalze und Erdalkalimetallsalze von Alkylbenzolsulfonsäuren, insbesondere Dodecylbenzolsulfonsäure-calciumsalz (®Phenylsulfonat CA, ®Phenylsulfonat CAL (beide Clariant) oder ®Emcol P 18.60, ®Emcol P 58.60 (beide Witco)).

Der Anteil an ionischem Emulgator (Komponente e) liegt beispielsweise im Bereich von 0 bis 20 Gew.-%, vorzugsweise 0 bis 10 Gew.-%, insbesondere 0,1 bis 10 Gew.-% bezogen auf das Gewicht der Formulierung.

Vorzugsweise ist das Gewichtsverhältnis von Komponenten a) + b) zu Komponenten d) + e) im Bereich von 10:1 bis 1:100, insbesondere 2:1 bis 1:50, ganz besonders 1:1 bis 1:5.

Zur Kontrolle des Sedimentationverhaltens des dispergierten Sulfonylhamstoffes enthalten die Formulierungen vorzugweise Verdickungs- und/oder Thixotropiermittel (Komponente f). In Frage kommen hierbei synthetische oder natürliche mineralische Produkte und/oder organische rheologische Additive, insbesondere solche, die für nichtwässrige Formulierungen geeignet sind.

Aus der Klasse der mineralischen Verdicker kommen reine Kieselsäuren in Frage, z.B. vom Typ ®Sipernat, ®Wessalon oder ®Aerosil von Degussa, oder Mischoxide, z. B. Magnesium-Aluminiumsilikate wie Attapulgit (®Attagel 40, Attagel 50 von Engelhard) oder Magnesium-Schichtsilikate wie Bentonite oder Hectorite. Besonders geeignet sind z.B. organisch modifizierte Hectorite wie ®Bentone 27, Bentone 34 oder Bentone 38, die von Rheox hergestellt werden.

Weitere geeignete organische Additive zur Beeinflussung der rheologischen Eigenschaften der Formulierung sind Verdickungs- und/oder Thixotropiermittel aus der Gruppe bestimmter Polyamide wie ®Thixa SR, ®Mixatrol SR 100 oder ®Mixatrol TSR sowie Polyester wie ®Thixatrol 289; alle Produkte von Rheox. Produkte auf Basis von Rizinusöl wie ®Thixicia E, ®Thixain R, ®Thixatrol ST oder ®Thixatrol GST, ebenfalls von Rheox, erwiesen sich als besonders wirkungsvoll zur Verhinderung einer Sedimentation des Sulfonylhamstoffes.

Die Formulierungen können ohne die Komponente (f) hergestellt werden und sind in Einzelfällen, in Abhängigkeit von Konzentration und Sedimentationstendenz des Sulfonylhamstoffs, auch ausreichend stabil. Die bevorzugt einzusetzenden Mengen an Verdickungs- und Thixotropiermittel hängen von der jeweiligen Zusammensetzung des Lösemittel-Tensid-Gemisches ab und liegen in der Regel im Bereich von 0,1 bis 10 Gew.-%, insbesondere 0,2 bis 5 Gew.-%, ganz besonders bevorzugt 0,5 bis 2,0 Gew.-%, bezogen auf das Gewicht der Formulierung.

Die genannten Formulierungshilfsmittel wie Tenside, Lösungsmittel und weitere Zusatzstoffe sind übliche oder bekannte Hilfsmittel und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y.; Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976.
Weitere Quellen sind die Datenblätter und Firmenprospekte der jeweiligen Hersteller- und Handelsfirmen.

Die Zubereitungen sind beispielsweise gekennzeichnet durch
a) 0,1 bis 50 Gew.-%, vorzugweise 0,1 bis 20 Gew.-%, insbesondere 0,2 bis 5 Gew.-% eines oder mehrerer Sulfonylharnstoffe,
b) 0,1 bis 60 Gew.-% eines oder mehrerer Wirkstoffe, die partiell oder ganz in der Komponente c) gelöst sind, beispielsweise 0,5 bis 50 Gew.-%, vorzugsweise 2 bis 30 Gew.-%, insbesondere 5 bis 15 Gew.-% eines oder mehrerer Herbizide, z. B. Phenoxypropionsäurederivate, oder 0,1 bis 40 Gew.-%, vorzugsweise 0,1 bis 20 Gew.-%, insbesondere 0,1 bis 5 Gew.-% eines oder mehrerer Safener oder 0,6 bis 60 Gew.-%, vorzugsweise 3 bis 50 Gew.-%, insbesondere 5,1 bis 15 Gew.-% eines Gemisches von 0,5 bis 50 Gew.-%, vorzugsweise 2 bis 30 Gew.-%, insbesondere 5 bis 10 Gew.-% Herbizid, z. B. eines Phenoxypropionsäurederivats, und 0,1 bis 40 Gew.-%, vorzugsweise 0,1 bis 20 Gew.-%, insbesondere 0,1 bis 5 Gew.-% Safener,
c) 5 bis 95 Gew.-%, vorzugsweise 10 bis 90 Gew.-%, insbesondere 40 bis 80 Gew.-% organisches Lösungsmittel oder Lösungsmittelgemisch,
d) 0,5 bis 40 Gew.-%, vorzugsweise 0,5 bis 20 Gew.-%, insbesondere 5 bis 15 Gew.-% eines oder mehrerer nichtionischer Emulgatoren,
e) 0 bis 20 Gew.-%, vorzugsweise 0 bis 10 Gew.-% eines oder mehrerer ionischer Emulgatoren,
f) 0 bis 10 Gew.-%, vorzugsweise 0,1 bis 10 Gew.-%, insbesondere 0,2 bis 5 Gew.-% eines oder mehrerer Verdickungs- oder Thixotropiermittel,
und kein Wasser oder bis zu 20 Gewichtsprozent, vorzugsweise kein Wasser oder bis zu 10 Gew.-% Wasser, insbesondere in gelöster Form
enthalten, wobei der Gehalt an Komponenten a) und b) (Gesamtwirkstoffgehalt) im Bereich von 0,1 bis 60 Gew.-%, vorzugsweise 0,6 bis 50 Gew.-%, insbesondere 2,5 bis 25 Gew.-% ist.

Die Gewichtsprozentangaben beziehen sich dabei jeweils auf das Gewicht der gesamten Zubereitung.

Die Herstellung der erfindungsgemäßen Suspensionskonzentrate, die selbst Suspensionen darstellen, kann nach an sich üblichen Verfahren erfolgen, die für die Herstellung von Suspensionen geeignet sind. Gemäß einem Standardverfahren werden sämtliche Komponenten in geeigneten Apparaten gemischt und vermahlen, beispielsweise mit einer Rührwerkskugelmühle vermahlen. Für die Feinverteilung des festen Sulfonylharnstoffs sind in der Regel mittlere Korngrößen von 50 µm oder weniger, vorzugsweise 10 µm oder weniger, insbesondere 1 bis 5 µm zweckmäßig.

Die erfindungsgemäßen nicht-wässrigen oder wasserarmen Suspensionskonzentrate ermöglichen die Herstellung einer flüssigen stabilen Zubereitung von Sulfonylhamstoffen mit anwendungstechnisch günstigen Eigenschaften. Ebenso lassen sich erfindungsgemäß stabile Zubereitungen für die gemeinsame Formulierung von herbiziden Sulfonylhamstoffen und Safenern oder Sulfonylharnstoffen mit Herbiziden wie aus der Reihe der Phenoxypropionsäurederivate nebst dazu einsetzbaren Safenem herstellen.

Die Stabilität der Formulierungen ist in besonderen Fällen auch unter thermischer Belastung hervorragend. Darüberhinaus weisen die Formulierungen vielfach günstige anwendungstechnische Eigenschaften auf. Bei der Anwendung der Suspensionskonzentrate, bei der sie üblicherweise zunächst mit Wasser zu versprühbaren Suspensionen auf die Anwendungskonzentration verdünnt und ausgebracht werden, erhält man im Vergleich zu den den WP-Formutierungen oder den WG-Formulierungen vergleichbare oder sogar verbesserte herbizide Wirkungen. Ähnlich werden bei Mischformulierungen mit Safenem oder Herbiziden wie den Phenoxypropionaten, gegebenenfalls in Gegenwart von Safenem, im Vergleich mit Tankmischungen aus Einzelformulienrngen der Sulfonylhamstoffe, Safener bzw. Phenoxypropionate und gegebenenfalls Safenem gleich gute oder oft sogar erhöhte oder länger anhaltende herbizide Wirkung bei gleicher Selektivität in Kulturen beobachtet.

Gegenstand der Erfindung ist deshalb auch die Verwendung einer erfindungsgemäßen Zubereitung als Pflanzenschutzmittel zur Bekämpfung von Schadpflanzen.

Dabei kann man so verfahren, dass man eine wirksame Menge der herbiziden Zubereitung zu einer wässrigen Suspension auf die Anwendungskonzentration verdünnt und die wässrige Suspension auf die Schadpflanzen, Teile der Pflanzen, Pflanzensamen, die Fläche, auf der die Pflanzen wachsen oder bekämpft werden sollen, oder eine Anbaufläche von Nutzpflanzen, die vor Schadpflanzen geschützt werden soll, appliziert.

In den nachfolgenden Tabellen sind einige Formulierungen aufgeführt, die bei Lagerung über 3 Monate bei 35 °C stabil sind und insbesondere auch keinen Abbau oder nur geringfügigen Abbau (weniger als 5 %) der Wirkstoffe (Herbizid/Safener) aufweisen. Die Suspensionskonzentrate wurden durch Mischen und Vermahlen der Komponenten in einer Rührwerkskugelmühle hergestellt.

In den nachfolgenden Tabellen 1 und 2 beziehen sich die Mengenangaben, inklusive Prozentangaben, auf das Gewicht, sofern nichts anders definiert ist.

Abkürzungen zu Tabellen 1 und 2:

| | |
|---|---|
| lodosulfuron = | 3-(4-Methoxy-6-methyl-1,3,5-triazin-2-yl)-1-(2-carboxy-5-iod-phenylsulfonyl)-harnstoff, |
| lodosulfuron-methyl-natrium = | 3-(4-Methoxy-6-methyl-1,3,5-triazin-2-yl)-1-(2-methoxycarbonyl-5-iod-phenylsulfonyl)-harnstoffnatriumsalz, |
| Fenoxaprop-P-ethyl = | (R)-2-[4-(6-Chlorbenzoxazol-2-yl-oxy)-phenoxy]propionsäureethylester |
| Sulfonylhamstoff A1 = | N,N-Dimethyl-2-[3-(4,6-dimethoxypyrimidin-2-yl)ureidosulfonyl]-4-formylaminobenzamid |
| Sulfonylhamstoff A2 = | 2-[3-(4,6-Dimethoxypyrimidin-2-yl)ureidosulfonyl]-4-methylsulfonylamidomethyl-benzoesäuremethylester |
| Mefenpyr-diethyl = | 1-(2,4-Dichlorphenyl)-5-(ethoxycarbonyl)-5-methyl-2-pyrazolin-3-carbonsäureethylester |
| Isoxadifen-ethyl = | 5,5-Diphenyl-2-isoxazolin-carbonsäureethylester |
| ®Solvesso 150 = | Mineralöl mit Aromatenanteilen; Siedebereich 187-207 °C |
| ®Solvesso 200 = | Mineralöl mit Aromatenanteilen; Siedebereich 219-282 °C |
| Rapssäure-methylester = | Rapsölderivat |
| ®Genapol X-060 = | Ethoxylierter Isotridecylalkohol mit 6 EO (Clariant) |
| ®Genapol X-060-methylether = | endständig mit Methyl verethertes Genapol X-060 |
| ®Genapol X-150 = | Ethoxylierter Isotridecylalkohol mit 15 EO (Clariant) |
| ®Genapol O-050 = | Ethoxylierter ungesättigter (C₁₆-C₁₈) Fettalkohol (überwiegend Oleylalkohol) mit 5 EO (Clariant) |
| ®Pluronic L 121, entspricht ®Synperonic L 121 = | Block-copolymer aus Ethylenoxid und Propylenoxid |
| ®Soprophor S/40-P = | Ethoxyliertes Tristyrylphenol mit 40 EO |
| ®Soprophor BSU = | Ethoxyliertes Tristyrylphenol mit 16 EO |
| ®Atplus 309 F = | Ethoxylierte Sorbitanester |
| ®Emulsogen EL 400 = | Ethoxylierte Fettsäure |
| ®Emcol P 18.60 = | Dodecylbenzolsulfonsäure-calciumsalz |
| ®Bentone 27 = | organisch modifiziertes Hectorite (mineralischer Verdicker) |
| ®Bentone 38 = | organisch modifiziertes Hectorite (mineralischer Verdicker) |
| ®Thixatrol ST = | Thixotropiermittel auf Basis eines organischen Rhizinusölderivats |

**Tabelle 1:**

| Beispiele für Suspensionskonzentrate | | | | | | | | | | | | |
|---|---|---|---|---|---|---|---|---|---|---|---|---|
| Beispiel Nr. | 1 | 2 | 3 | 4 | 5 | 6 | 7 | 8 | 9 | 10 | 11 | 12 |
| lodosulfuron | | | | | | | | | 1,1 | 1,1 | 1,1 | |
| Iodosuifuronmethyl-natrium | 3,8 | 1,9 | 1,0 | 1,0 | 1,1 | 1,1 | 0,8 | 0,8 | | | | 1,3 |
| Fenoxaprop-P-ethyl | 22,9 | 11,5 | 7,8 | 7,8 | 6,4 | 6,6 | 6,2 | 6,2 | 6,5 | 6,5 | 6,5 | 7,8 |
| Mefenpyrdiethyl | 11,4 | 5,8 | 3,9 | 3,9 | 3,2 | 3,3 | 2,3 | 2,3 | 3,2 | 3,2 | 3,2 | 3,9 |
| Solvesso 150 | 40,7 | | | | | | | | | | | |
| Solvesso 200 | | 63,0 | 71,8 | 73,5 | | | 77,9 | 76,9 | | | | 83,0 |
| Rapssäuremethylester | | | | | 72,3 | 71,2 | | | 71,2 | 75,4 | 71,4 | |
| Pluronic L 121 | | | 12,0 | | | | | | | | | |
| Genapol X-060 | 10,0 | 12,0 | 1,0 | | | 12,0 | | | | | 12,0 | 1,0 |
| Genapol X-060-methylether | | | | | | | 10,0 | 10,0 | | | | |
| Genapol O-050 | | | | | | | | | | 12,0 | | |
| Soprophor S/40-P | 8,0 | | | | | | | | | | | |
| Soprophor BSU | | | | 12,0 | | | | | | | | |
| Emcol P 18.60 | | 4,0 | 1,0 | | | 4,0 | 2,0 | 2,0 | 4,0 | | 4,0 | 1,0 |
| Bentone 27 | 3,2 | | | | | | | | | | | |
| Bentone 38 | | 1,8 | 1,5 | 1,8 | 2,0 | 1,8 | | | 2,0 | 1,8 | 1,8 | 2,0 |
| Thixatrol ST | | | | | | | 0,8 | 0,8 | | | | |
| Atplus 309 F | | | | | 15,0 | | | | 12,0 | | | |
| Emulsogen EL 400 | | | | | | | | 1,0 | | | | |

**Tabelle 2:**

| Beispiele für Suspensionskonzentrate | | | | | | |
|---|---|---|---|---|---|---|
| Beispiel Nr. | 2/1 | 2/2 | 2/3 | 2/4 | 2/5 | 2/6 |
| Sulfonylhamstoff A1 | 2,3 | 2,3 | 4,7 | 4,7 | | |
| Isoxadifen-ethyl | 2,3 | 2,3 | 4,7 | 4,7 | | |
| Sulfonylhamstoff A2 | | | | | 2,9 | 2,9 |
| Mefenpyr-diethyl | | | | | 8,7 | 8,7 |
| Solvesso 200 | 33,3 | 33,3 | 28,4 | 33,8 | 69,9 | 70,4 |
| Rapssäure-methylester | 44,1 | 44,1 | 35,4 | 38,8 | | |
| Genapol X-060 | 12,0 | | 20,8 | 12,0 | 12,0 | |
| Genapol X-150 | | | | | | 12,0 |
| Emcol P 18.60 | 4,0 | 4,0 | 4,0 | 4,0 | 4,0 | 4,0 |
| Bentone 38 | 2,0 | 2,0 | 2,0 | 2,0 | 2,5 | 2,0 |
| Atplus 309 F | | 12,0 | | | | |

### Vergleichsbeispiele

Die Formulierungen der Beispiele 1 bis 12 aus Tabelle 1 sind bezüglich der Wirkstoffe 3 Monate bei 35 °C lagerstabil. Die Formulierungen der Beispiele 2/1 bis 2/4 sind für 4 Monate bei 40°C lagerstabil. Die Formulierungen der Beispiele 5 und 6 sind sogar bei höheren Temperaturen stabil, beispielsweise bei 54°C über zwei Wochen. Werden die Wirkstoffe dagegen als Suspoemulsionen gemäß EP-A-0514769 formuliert, beobachtet man unter jeweils gleichen Lagerbedingungen weitgehende Zersetzung der jeweiligen Wirkstoffe aus der Gruppe der Sulfonylhamstoffe.

## Patentansprüche

1. Zubereitungen in Form von flüssigen Suspensionskonzentraten, **dadurch gekennzeichnet, dass** sie
a) einen oder mehrere feste herbizide Wirkstoffe aus der Reihe der Sulfonylharnstoffe in suspendierter Form, wobei die Sulfonylharnstoffe aus der Gruppe der (A1) Phenylsulfonylharnstoffe und deren Salzen,
(A2) Thienylsulfonylharnstoffe und deren Salze, (A4) Sulfondiamid-Derivaten und deren Salzen und (A6) Alkoxyphenoxysulfonylharnstoffen und deren Salzen ausgewählt sind,
b) einen oder mehrere Wirkstoffe, die partiell oder ganz in der Komponente c) gelöst sind,
c) ein organisches Lösemittel oder Lösemittelgemisch,
d) einen oder mehrere nichtionische Emulgatoren,
e) gegebenenfalls einen oder mehrere ionische Emulgatoren,
f) gegebenenfalls ein oder mehrere Verdickungs- oder Thixotropiermittel
und kein Wasser oder bis zu 30 Gewichtsprozent Wasser in gelöster Form enthalten.

2. Zubereitung nach Anspruch 1, **dadurch gekennzeichnet, dass** sie
a) 0.1 bis 50 Gew.-% eines oder mehrerer Sulfonylhamstoffe,
b) 0,1 bis 60 Gew.-% eines oder mehrerer Wirkstoffe, die partiell oder ganz in der Komponente c) gelöst sind,
c) 5 bis 95 Gew.-% organisches Lösungsmittel oder Lösungsmittelgemisch,
d) 0,5 bis 40 Gew.-% eines oder mehrerer nichtionischer Emulgatoren,
e) 0 bis 20 Gew.-% eines oder mehrerer ionischer Emulgatoren,
f) 0 bis 10 Gew.-% eines oder mehrerer Verdickungs- oder Thixotropiermittel, und kein Wasser oder bis zu 20 Gewichtsprozent Wasser in gelöster Fonn enthalten, wobei der Gehalt an Komponenten a) und b) (Gesamtwirkstoffgehalt) im Bereich von 0,1 bis 60 Gew.-% ist.

3. Zubereitung nach Anspruch 1 oder 2, **dadurch gekennzeichnet, dass** sie als Komponente b) 0,5 bis 50 Gew.-% eines oder mehrerer substituierter Phenoxypropionsäurederivate oder 0,1 bis 40 Gew.-% eines oder mehrerer Safener oder 0,6 bis 60 Gew.-% eines Gemisches von 0,5 bis 50 Gew.-% Phenoxypropionsäurederivat und 0,1 bis 40 Gew.-% Safener enthält.

4. Zubereitung nach einem der Ansprüche 1 bis 3, **dadurch gekennzeichnet, dass** sie
a) 0,1 bis 20 Gew.-% eines oder mehrerer Sulfonylharnstoffe,
b) 2 bis 30 Gew.-% eines oder mehrerer Phenoxypropionsäurederivate oder 0,1 bis 40 Gew.-% eines oder mehrerer Safener oder 3 bis 50 Gew.-% eines Gemisches von 2 bis 30 Gew.-% Phenoxyprcpionsäurederivat und 0,1 bis 40 Gew.-% Safener,
c) 10 bis 90 Gew.-% organisches Lösungsmittel oder Lösungsmittelgemlsch,
d) 0,5 bis 20 Gew.-% eines oder mehrerer nichtivnischer Emulgatoren,
e) 0 bis 10 Gew.-% eines oder mehrerer ionischer Emulgatoren,
f) 0,1 bis 10 Gew.-% eines oder mehrerer Verdickungs- oder Thixotropiermittel, und kein Wasser oder bis zu 10 Gewichtsprozent Wasser in gelöster Form enthalten, wobei der Gehalt an Komponenten a) und b) (Gesamtwirkstoffgehalt) im Bereich von 0,6 bis 50 Gew.-% ist.

5. Zubereitung nach einem der Ansprüche 1 bis 4, **dadurch gekennzeichnet, dass** sie
a) 0,2 bis 5 Gew.-% eines oder mehrerer Sulfonylharnstoffe.
b) 5 bis 15 Gew.-% eines oder mehrerer Phenoxypropionsäurederivate oder 0,1 bis 5 Gew.-% eines oder mehrerer Safener oder 5,1 bis 15 Gew.-% eines Gemisches von 5 bis 10 Gew.-% Phenoxypropionsäurederivat und von 0,1 bis 5 Gew.-% Safener,
c) 40 bis 80 Gew.-% organisches Lösungsmittel oder Lösungsmittelgemisch,
d) 5 bis 15 Gew.-% eines oder mehrerer nichtionischer Emulgatoren,
e) 0 bis 10 Gew.-% eines oder mehrerer ionischer Emulgatoren,
f) 0,2 bis 5 Gew.-% eines oder mehrerer Verdickungs- oder Thixotropiermittel, und kein Wasser oder bis zu 10 Gewichtsprozent Wasser in gelöster Form enthalten, wobei der Gehalt an Komponenten a) und b) (Gesamtwirkstoffgehalt) im Bereich von 2,5 bis 25 Gew.-% ist.

6. Zubereitung nach einem der Ansprüche 1 bis 5, **dadurch gekennzeichnet, dass** sie als Komponente a) einen oder mehrere Sulfonylhamstoffe aus der Gruppe Chlorsulfuron, Chlorimuron-ethyl, Metsulfuron-methyl, Triasulfuron, Cinosulfuron, Prosulfuron, Ethametsulfuron-methyl, Sulfometuron-methyl, Tribenuron-methyl, Primisulfuron-methyl, Iodosulfuron-methyl, Triflusulfuron-methyl, Oxasulfuron, 2-[3-(4,6-Dimethoxypyrimidin-2-yl)ureidosulfonyl]-4-methylsulfonylamidomethylbenzoesäuremethylester, N,N-Dimethyl-2-[3-(4,6-dimethoxypyrimidin-2-yl)ureidosulfonyl]-4-formylaminobenzamid, Thifensulfuron-methyl, Amidosulfuron, Ethoxysulfuron und deren Salze enthalten.

7. Zubereitung nach einem der Ansprüche 1 bis 6, **dadurch gekennzeichnet, dass** sie als Komponente b) einen oder mehrere Herbizide aus der Gruppe Diclofop-methyl, Cyhalofop-butyl, Pirifenop-butyl, Haloxyfop-methyl, Haloxyfop-P-methyl, Clodinafop-propargyl, Fluazifop-butyl, Fluazifop-P-butyl, Quizalofop-methyl oder -ethyl oder -tefuryl, Quizalofop-P-methyl oder -ethyl oder -tefuryl, Propaquizafop, Fenoxaprop-ethyl, Fenoxaprop-P-ethyl und gegebenenfalls einen Safener enthalten.

8. Zubereitung nach einem der Ansprüche 1 bis 7, **dadurch gekennzeichnet, dass** sie als Komponente c)
1. ein unpolares Lösungsmittel aus der Gruppe
- aromatische Lösungsmittel, die von Benzol abgeleitet sind,
- aliphatische Kohlenwasserstoffe und
- Gemische von aromatischen und aliphatischen Kohlenwasserstoffen oder
2. ein polares lipophiles Lösungsmittel aus der Gruppe
- Öle,
- Ester aus der Gruppe der aliphatischen Carbonsäureester,
- Ester aromatischer Carbonsäuren,
- Ester anderer organischer Säuren und
- Gemische der genannten Lösungsmittel oder
3. Gemische aus Lösungsmittel aus 1. und 2. enthalten.

9. Zubereitung nach einem der Ansprüche 1 bis 8, **dadurch gekennzeichnet, dass** sie als Komponente d) einen Emulgator oder ein Emulgatorgemisch aus der Gruppe
- Ethoxylierte, gesättigte und ungesättigte aliphatische Alkohole,
- endständig veretherte ethoxylierte, gesättigte und ungesättigte aliphatische Alkohole,
- ethoxylierte Arylalkylphenole,
- ethoxylierte Alkylphenole mit ein oder mehreren Alkylresten,
- ethoxylierte Hydroxyfettsäuren,
- Tenside aus der Gruppe der ethoxylierten Sorbitanester,
- Block-copolymere aus Ethylenoxid und Propylenoxid,
- Kondensationsprodukte aus EO-PO-Block-copolymeren und Ethylendiamin und
- Gemische der genannten nichtionischen Tenside enthalten.

10. Zubereitung nach einem der Ansprüche 1 bis 9, **dadurch gekennzeichnet, dass** sie als Komponente f) ein Verdickungs- oder Thixotropiermittel aus der Gruppe synthetischer mineralischer Produkte, natürlicher mineralischer Produkte und organischer Additive enthalten.

11. Verfahren zur Herstellung einer Zubereitung gemäß einem der Ansprüche 1 bis 10, **dadurch gekennzeichnet, dass** man die Komponenten der Zubereitung mischt und gegebenenfalls vermahlt.

12. Verfahren zur Bekämpfung von Schadpflanzen, **dadurch gekennzeichnet, dass** man eine wirksame Menge einer herbiziden Zubereitung gemäß einem der Ansprüche 1 bis 10 zu einer wässrigen Suspension auf die Anwendungskonzentration verdünnt und die wässrige Suspension auf die Schadpflanzen, Teile der Pflanzen, Pflanzensamen, die Fläche, auf der die Pflanzen wachsen oder bekämpft werden sollen, oder eine Anbaufläche von Nutzpflanzen, die vor Schadpflanzen geschützt werden soll, appliziert.

13. Verwendung einer Zubereitung gemäß einem der Ansprüche 1 bis 10 als Pflanzenschutzmittel zur Bekämpfung von Schadpflanzen.

## Claims

1. A preparation in the form of a liquid suspension concentrate, which comprises
a) one or more solid herbicidally active compounds from the group of the sulfonylureas in suspended form, the sulfonylureas being selected from the group consisting of (A1) phenylsulfonylureas and salts thereof, (A2) thienylsulfonylureas and salts thereof, (A4) sulfonediamide derivatives and salts thereof and (A6) alkoxyphenoxysulfonylureas and salts thereof,
b) one or more active compounds which are partially or completely dissolved in component c),
c) an organic solvent or solvent mixture,
d) one or more nonionic emulsifiers,
e) optionally one or more ionic emulsifiers,
f) optionally one or more thickeners or thixotropic agents
and no water or up to 30 percent by weight of water in dissolved form.

2. A preparation as claimed in claim 1, which comprises
a) from 0.1 to 50% by weight of one or more sulfonylureas,
b) from 0.1 to 60% by weight of one or more active compounds which are partially or completely dissolved in component c),
c) from 5 to 95% by weight of an organic solvent or solvent mixture,
d) from 0.5 to 40% by weight of one or more nonionic emulsifiers,
e) from 0 to 20% byweight of one or more ionic emulsifiers,
f) from 0 to 10% by weight of one or more thickeners or thixotropic agents,
and no water or up to 20 percent by weight of water in dissolved form, where the amount of components a) and b) (total amount of active compound) is in the range from 0.1 to 60% by weight.

3. A preparation as claimed in claim 1 or 2, which comprises, as component b), from 0.5 to 50% by weight of one or more substituted phenoxypropionic acid derivatives or from 0.1 to 40% by weight of one or more safeners or from 0.6 to 60% by weight of a mixture of from 0.5 to 50% by weight of phenoxypropionic acid derivative and from 0.1 to 40% by weight of safener.

4. A preparation as claimed in any of claims 1 to 3, which comprises
a) from 0.1 to 20% by weight of one or more sulfonylureas,
b) from 2 to 30% by weight of one or more phenoxypropionic acid derivatives or from 0.1 to 40% by weight of one or more safeners or from 3 to 50% by weight of a mixture of from 2 to 30% by weight of phenoxypropionic acid derivative and from 0.1 to 40% by weight of safener,
c) from 10 to 90% by weight of organic solvent or solvent mixture,
d) from 0.5 to 20% by weight of one or more nonionic emulsifiers,
e) from 0 to 10% by weight of one or more ionic emulsifiers,
f) from 0.1 to 10% by weight of one or more thickeners or thixotropic agents,
and no water or up to 10 percent by weight of water in dissolved form, where the amount of components a) and b) (total amount of active compound) is in the range from 0.6 to 50% by weight.

5. A preparation as claimed in any of claims 1 to 4, which comprises
a) from 0.2 to 5% by weight of one or more sulfonylureas,
b) from 5 to 15% by weight of one or more phenoxypropionic acid derivatives or from 0.1 to 5% by weight of one or more safeners or from 5.1 to 15% by weight of a mixture of from 5 to 10% by weight of phenoxypropionic acid derivative and from 0.1 to 5% by weight of safener,
c) from 40 to 80% by weight of organic solvent or solvent mixture,
d) from 5 to 15% by weight of one or more nonionic emulsifiers,
e) from 0 to 10% by weight of one or more ionic emulsifiers,
f) from 0.2 to 5% by weight of one or more thickeners or thixotropic agents,
and no water or up to 10 percent by weight of water in dissolved form, where the amount of components a) and b) (total amount of active compound) is in the range from 2.5 to 25% by weight.

6. A preparation as claimed in any of claims 1 to 5, which comprises, as component a), one or more sulfonylureas selected from the group consisting of chlorsulfuron, chlorimuron-ethyl, metsulfuron-methyl, triasulfuron, cinosulfuron, prosulfuron, ethametsulfuron-methyl, sulfometuron-methyl, tribenuron-methyl, primisulfuron-methyl, iodosulfuron-methyl, triflusulfuron-methyl, oxasulfuron, methyl 2-[3-(4,6-dimethoxypyrimidin-2-yl)ureidosulfonyl]-4-methylsulfonylamidomethylbenzoate, N,N-dimethyl-2-[3-(4,6-dimethoxypyrimidin-2-yl)ureidosulfonyl]-4-formylaminobenzamide, thifensulfuron-methyl, amidosulfuron, ethoxysulfuron and salts thereof.

7. A preparation as claimed in any of claims 1 to 6, which comprises, as component b), one or more herbicides selected from the group consisting of diclofop-methyl, cyhalofop-butyl, pirifenop-butyl, haloxyfop-methyl, haloxyfop-P-methyl, clodinafop-propargyl, fluazifop-butyl, fluazifop-P-butyl, quizalofop-methyl or -ethyl or -tefuryl, quizalofop-P-methyl or -ethyl oder -tefuryl, propaquizafop, fenoxaprop-ethyl, fenoxaprop-P-ethyl and optionally a safener.

8. A preparation as claimed in any of claims 1 to 7, which comprises, as component c)
1. a nonpolar solvent selected from the group consisting of
- aromatic solvents which are derived from benzene,
- aliphatic hydrocarbons and
- mixtures of aromatic and aliphatic hydrocarbons or
2. a polar lipophilic solvent selected from the group consisting of
- oils,
- esters selected from the group of the aliphatic carboxylic esters,
- esters of aromatic carboxylic acids,
- esters of other organic acids and
- mixtures of the solvents mentioned or
3. mixtures of solvents from 1. and 2.

9. A preparation as claimed in any of claims 1 to 8, which comprises, as component d), an emulsifier or an emulsifier mixture selected from the group consisting of
- ethoxylated, saturated and unsaturated aliphatic alcohols,
- terminally etherified ethoxylated, saturated and unsaturated aliphatic alcohols,
- ethoxylated arylalkylphenols,
- ethoxylated alkylphenols having one or more alkyl radicals,
- ethoxylated hydroxyfatty acids,
- surfactants from the group of the ethoxylated sorbitan esters,
- block copolymers of ethylene oxide and propylene oxide,
- condensates of EO-PO block copolymers and ethylenediamine and
- mixtures of the nonionic surfactants mentioned.

10. A preparation as claimed in any of claims 1 to 9, which comprises, as component f), a thickener or thixotropic agent selected from the group consisting of synthetic mineral products, natural mineral products and organic additives.

11. A process for preparing a composition as claimed in any of claims 1 to 10, which comprises mixing and, if appropriate, grinding the components of the preparation.

12. A method for controlling harmful plants, which comprises diluting an effective amount of a herbicidal preparation as claimed in any of claims 1 to 10 to the use concentration, giving an aqueous suspension, and applying the aqueous suspension to the harmful plants, parts of plants, plant seeds, to the area on which the plants grow or are to be controlled, or to an area of useful plants under cultivation, which are to be protected against harmful plants.

13. The use of a preparation as claimed in any of claims 1 to 10 as crop protection composition for controlling harmful plants.

## Revendications

1. Préparations sous forme de concentrés de suspensions liquides, **caractérisées en ce qu'**elles comprennent
a) une ou plusieurs substances actives herbicides solides de la série des sulfonylurées sous forme suspendue, les sulfonylurées étant choisies dans le groupe comprenant (A1) les phénylsulfonylurées et leurs sels, (A2) les thiénylsulfonylurées et leurs sels, (A4) les dérivés de sulfondiamide et leurs sels et (A6) les alkoxyphénoxysulfonylurées et leurs sels,
b) une ou plusieurs substances actives qui sont dissoutes en partie ou complètement dans le composant c),
c) un solvant organique ou un mélange de solvants organiques,
d) un ou plusieurs émulsifiants non-ioniques,
e) éventuellement un ou plusieurs émulsifiants ioniques,
f) éventuellement un ou plusieurs épaississants ou agents thixotropes
et pas d'eau ou jusqu'à 30 % en poids d'eau, sous forme dissoute.

2. Préparations selon la revendication 1, **caractérisées en ce qu'**elles comprennent
a) de 0,1 à 50% en poids d'une ou plusieurs sulfonylurées,
b) de 0,1 à 60% en poids d'une ou plusieurs substances actives qui sont dissoutes en partie ou complètement dans le composant c),
c) de 5 à 95% en poids d'un solvant organique ou d'un mélange de solvants organiques,
d) de 0,5 à 40% en poids d'un ou plusieurs émulsifiants non-ioniques,
e) de 0 à 20% en poids d'un ou plusieurs émulsifiants ioniques,
f) de 0 à 10% en poids d'un ou plusieurs épaississants ou agents thixotropes et pas d'eau ou jusqu'à 20 % en poids d'eau, sous forme dissoute, où la teneur en composants a) et b) (teneur en substances actives totale) se trouve dans l'intervalle de 0,1 à 60% en poids.

3. Préparation selon la revendication 1 ou 2, **caractérisée en ce qu'**elle comprend, en tant que composant b), de 0,5 à 50% en poids d'un ou plusieurs dérivés d'acide phénoxypropionique substitués ou de 0,1 à 40% en poids d'un ou plusieurs antidotes ou de 0,6 à 60% en poids d'un mélange de 0,5 à 50% en poids de dérivé d'acide phénoxypropionique et de 0,1 à 40% en poids d'antidote.

4. Préparations selon l'une quelconque des revendications 1 à 3, **caractérisées en ce qu'**elles comprennent
a) de 0,1 à 20% en poids d'une ou plusieurs sulfonylurées,
b) de 2 à 30% en poids d'un ou plusieurs dérivés d'acide phénoxypropionique ou de 0,1 à 40% en poids d'un ou plusieurs antidotes ou de 3 à 50% en poids d'un mélange de 2 à 30% en poids de dérivé d'acide phénoxypropionique et de 0,1 à 40% en poids d'antidote,
c) de 10 à 90% en poids d'un solvant organique ou d'un mélange de solvants organiques,
d) de 0,5 à 20% en poids d'un ou plusieurs émulsifiants non-ioniques,
e) de 0 à 10% en poids d'un ou plusieurs émulsifiants ioniques,
f) de 0,1 à 10% en poids d'un ou plusieurs épaississants ou agents thixotropes
et pas d'eau ou jusqu'à 10 % en poids d'eau, sous forme dissoute, où la teneur en composants a) et b) (teneur en substances actives totale) se trouve dans l'intervalle de 0,6 à 50% en poids.

5. Préparations selon l'une quelconque des revendications 1 à 4, **caractérisées en ce qu'**elles comprennent
a) de 0,2 à 5% en poids d'une ou plusieurs sulfonylurées,
b) de 5 à 15% en poids d'un ou plusieurs dérivés d'acide phénoxypropionique ou de 0,1 à 5% en poids d'un ou plusieurs antidotes ou de 5,1 à 15% en poids d'un mélange de 5 à 10% en poids de dérivé d'acide phénoxypropionique et de 0,1 à 5% en poids d'antidote,
c) de 40 à 80% en poids d'un solvant organique ou d'un mélange de solvants organiques,
d) de 5 à 15% en poids d'un ou plusieurs émulsifiants non-ioniques,
e) de 0 à 10% en poids d'un ou plusieurs émulsifiants ioniques,
f) de 0,2 à 5% en poids d'un ou plusieurs épaississants ou agents thixotropes
et pas d'eau ou jusqu'à 10 % en poids d'eau, sous forme dissoute, où la teneur en composants a) et b) (teneur en substances actives totale) se trouve dans l'intervalle de 2,5 à 25% en poids.

6. Préparations selon l'une quelconque des revendications 1 à 5, **caractérisées en ce qu'**elles comprennent, en tant que composant a), une ou plusieurs sulfonylurées du groupe comprenant chlorsulfuron, chlorimuron-ethyl, metsulfuron-methyl, triasulfuron, cinosulfuron, prosulfuron, ethametsulfuron-methyl, sulfometuron-methyl, tribenuron-methyl, primisulfuron-methyl, iodosulfuron-methyl, triflusulfuron-methyl, oxasulfuron, 2-[3-(4,6-diméthoxypyrimidin-2-yl)uréidosulfonyl]-4-méthylsulfonylamidométhyl-benzoate de méthyle, N,N-diméthyl-2-[3-(4,6-diméthoxypyrimidin-2-yl)uréidosulfonyl]-4-formylaminobenzamide, thifensulfuron-methyl, amidosulfuron, ethoxysulfuron et leurs sels.

7. Préparations selon l'une quelconque des revendications 1 à 6, **caractérisées en ce qu'**elles comprennent, en tant que composant b), un ou plusieurs herbicides du groupe comprenant diclofop-methyl, cyhalofop-butyl, pirifenop-butyl, haloxyfop-methyl, haloxyfop-P-methyl, clodinafop-propargyl, fluazifop-butyl, fluazifop-P-butyl, quizalofop-methyl ou -ethyl ou - tefuryl, quizalofop-P-methyl ou -ethyl ou -tefuryl, propaquizafop, fenoxaprop-ethyl, fenoxaprop-P-ethyl et éventuellement un antidote.

8. Préparations selon l'une quelconque des revendications 1 à 7, **caractérisées en ce qu'**elles comprennent, en tant que composant c),
1. un solvant apolaire pris dans le groupe comprenant
- des solvants aromatiques qui sont dérivés du benzène,
- des hydrocarbures aliphatiques et
- des mélanges d'hydrocarbures aromatiques et aliphatiques
ou
2. un solvant polaire lipophile pris dans le groupe comprenant
- des huiles,
- des esters du groupe des esters d'acides carboxyliques aliphatiques,
- des esters d'acides carboxyliques aromatiques,
- des esters d'autres acides organiques et
- des mélanges de solvants mentionnés ou
3. des mélanges de solvants de 1. et 2.

9. Préparations selon l'une quelconque des revendications 1 à 8, **caractérisées en ce qu'**elles comprennent, en tant que composant d), un émulsifiant ou un mélange d'émulsifiants pris dans le groupe comprenant
- des alcools aliphatiques saturés et insaturés, oxéthylés,
- des alcools aliphatiques saturés et insaturés, oxéthylés, éthérifiés en fin de chaîne
- des arylalkylphénols oxéthylés,
- des alkylphénols oxéthylés avec un ou plusieurs restes alkyles,
- des hydroxyacides gras oxéthylés,
- des agents de surface du groupe des esters du sorbitane oxéthylés
- des copolymères en blocs d'oxyde d'éthylène et d'oxyde de propylène,
- des produits de condensation de copolymères OE-OP en blocs et d'éthylènediamine et
- des mélanges des agents de surface non ioniques mentionnés.

10. Préparations selon l'une quelconque des revendications 1 à 9, **caractérisées en ce qu'**elles contiennent, en tant que composant f), un épaississant ou agent thixotrope du groupe des produits minéraux synthétiques, des produits minéraux naturels et des additifs organiques.

11. Procédé pour la préparation d'une préparation selon l'une quelconque des revendications 1 à 10, **caractérisé en ce qu'**on mélange et éventuellement broie les composants de la préparation.

12. Procédé pour la lutte contre les plantes nuisibles, **caractérisé en ce que** l'on dilue une quantité efficace d'une préparation herbicide selon l'une quelconque des revendications 1 à 10 pour obtenir une suspension aqueuse à la concentration d'emploi et **en ce que** l'on applique la suspension aqueuse sur les plantes nuisibles, parties des plantes, semences des plantes, les surfaces sur lesquelles les plantes poussent ou sur lesquelles on doit lutter contre elles, ou une surface cultivée de plantes utiles que l'on doit protéger des plantes nuisibles.

13. Utilisation d'une préparation selon l'une quelconque des revendications 1 à 10 en tant qu'agent phytosanitaire pour la lutte contre les plantes nuisibles.
